(19) Europäisches Patentamt
European Patent Office
Office européen des brevets

(11) **EP 0 958 742 B1**

(12) **FASCICULE DE BREVET EUROPEEN**

(45) Date de publication et mention
de la délivrance du brevet:
**11.09.2002 Bulletin 2002/37**

(51) Int Cl.$^7$: **A01N 43/80**

(21) Numéro de dépôt: **99420116.8**

(22) Date de dépôt: **12.05.1999**

(54) **Mélanges herbicides à base d'aclonifen et de clomazone**

Herbizide Mischungen, die Aclonifen und Clomazone enthalten

Herbicidal mixtures containing aclonifen and clomazone

(84) Etats contractants désignés:
**AT BE CH DE DK ES FI FR GB GR IE IT LI LU NL PT SE**

(30) Priorité: **20.05.1998 FR 9806562**

(43) Date de publication de la demande:
**24.11.1999 Bulletin 1999/47**

(73) Titulaire: **AVENTIS CROPSCIENCE S.A.**
**69009 Lyon (FR)**

(72) Inventeurs:
• **Francois, André**
**69006 Lyon (FR)**
• **Adrien, Magali**
**69530 Brignais (FR)**

(56) Documents cités:
**US-A- 4 394 159** **US-A- 4 405 357**

• **CLIVE TOMLIN (ED.): "The pesticide manual, 10th. Edition" , BRISTISH CROP PROTECTION COUNCIL , FARNHAM, GB XP002108281 see entry nos.: 9, 151**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne des compositions herbicides à performances améliorées.

On connaît l'herbicide clomazone notamment par le brevet des Etats Unis d'Amérique n° 4405357. Cet herbicide sélectif est connu essentiellement pour son application dans la culture du soja, maïs, pois, etc., et dans les surfaces où aucune sélectivité n'est requise comme les marais, les vergers, les régions montagneuse et les bords de routes. Cet herbicide est aussi connu comme étant particulièrement actif même à de très faibles doses, en sorte que son efficacité est assez sensible à de faibles variations de doses, et que l'association avec d'autres herbicides est assez imprévisible dans ses résultats. Il est appliqué de préférence en pré émergence ou incorporé au sol avant plantation.

Il a maintenant été trouvé que l'on pouvait obtenir des compositions herbicides à hautes performances et sélectives vis-à-vis des céréales, grâce à des mélanges de clomazone avec certains herbicides particuliers. D'autres avantages de la présente invention apparaîtront au cours de la description qui va suivre, notamment la bonne activité des compositions selon l'invention sur les mauvaises herbes, spécialement les mauvaises herbes constituant un problème économique sérieux.

Plus précisément, l'invention concerne des associations herbicides caractérisées en ce qu'elles comprennent comme matière active un mélange comprenant la clomazone (I) et l'aclonifen (II).

Selon un autre aspect, l'invention concerne des compositions comprenant une quantité synergistiquement active d'un mélange comprenant la clomazone (I) et l'aclonifen (II).

Le clomazone est le composé de nom chimique 2-((2-chlorophenyl)methyl)-4,4-dimethyl-3-isoxazolidinone,

L'aclonifen est le composé de nom chimique 2-chloro 6-nitro 3-phenoxyaniline. On connaît cet herbicide notamment par le brevet des Etats Unis d'Amérique n° 4394159. C'est essentiellement un herbicide utilisé en pré émergence dans de nombreuses cultures.

Par ailleurs, ces composés herbicides sont décrits dans au moins un des 2 ouvrages suivants :

- "The Pesticide Manual" 11ème édition (1997), rédigé par Clive Tomlin et édité par le British Crop Protection Council et la Royal Society of Chemistry ;
- "Index Phytosanitaire" 34ème édition, rélisé par Sophie Cluzean et édité par l'Association de Coordination Agricole (ACTA), 1998.

De manière parfaitement inattendue, la composition selon l'invention améliore de façon notable l'action des matières actives prises séparément Cette amélioration se traduit notamment par une diminution des doses de chacun des constituants, ce qui est particulièrement avantageux pour l'utilisateur et l'environnement. Le produit (mélange) herbicide présente ainsi des propriétés synergiques attestées par l'application de la méthode définie par Limpel, L.E., P.H. Schuldt et D.Lammont, 1962, Proc. NEWCC 16:48-53, en utilisant la formule suivante, encore appelée formule de Colby :

$$E = X + Y - X.Y/100$$

dans laquelle:

- E est le pourcentage attendu de destruction de la mauvaise herbe par un mélange des deux herbicides A et B à des doses définies, respectivement égales à a et b ;
- X est le pourcentage de destruction observé par l'herbicide A à la dose a,
- Y est le pourcentage de destruction observé par l'herbicide B à la dose b.

Quand le pourcentage de destruction observé pour le mélange est supérieur à E, il y a synergie.

La proportion pondérale de composé (I) par rapport au composé (II) dans les composition selon l'invention est généralement comprise entre 0,008 et 0,25, de préférence entre 0,025 et 0,1, et avantageusement égale à 0,039.

Les compositions herbicides selon l'invention contiennent habituellement 0,5 à 95 % de matières actives.

Il peut s'agir de compositions extemporanées, ou diluées, ou encore de compositions concentrées, ou compositions dites "prêtes à l'emploi", c'est-à-dire prêtes pour la commercialisation.

Les compositions selon l'invention peuvent comprendre en outre tous les additifs ou adjuvants habituels des compositions phytosanitaires, notamment des supports, des tensioactifs, des agents d'adhérence, des agents dispersants, ainsi que éventuellement d'autres matières actives herbicides.

Les compositions selon l'invention peuvent être sous forme solides ou liquides, sous forme de solutions ou de suspensions ou d'émulsions ou de concentrés émulsionnables.

Par le terme "support", dans le présent exposé, on désigne une matière organique ou minérale, naturelle ou synthétique, avec laquelle les matières actives sont associées pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...).

L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est désirable pour favoriser la dispersion des matières actives dans l'eau et leur bonne application sur les végétaux.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, des pigments, des colorants, des polymères.

Plus généralement, les compositions selon l'invention peuvent être associées à tous les additifs solides ou liquides correspondant aux techniques habituelles de la mise en formulation.

Parmi les compositions, on peut citer de manière générale les compositions solides ou liquides, mais les compositions liquides sont préférées, tant en raison de leur commodité de mise en oeuvre qu'en raison de leur simplicité de fabrication.

Comme formes de compositions solides, on peut citer les poudres pour poudrage ou dispersion (à teneur en composés actifs pouvant aller jusqu'à 100 %) et les granulés, notamment ceux obtenus par extrusion, par compactage, par imprégnation d'un support granulé, par granulation à partir d'une poudre (la teneur en composés actifs dans ces granulés étant entre 1 et 80 % pour ces derniers cas).

Comme formes de compositions liquides ou destinées à constituer des compositions liquides lors de l'application, on peut citer les solutions, en - particulier les concentrés solubles dans l'eau, les concentrés émulsionnables, les émulsions, les suspensions concentrées, les aérosols, les poudres mouillables (ou poudre à pulvériser), les pâtes.

Les concentrés émulsionnables ou solubles comprennent le plus souvent 10 à 80 % de matières actives, les émulsions ou solutions prêtes à l'application contenant, quant à elles, 0,01 à 20 % de matières actives.

Par exemple, en plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précédemment cités.

A partir de ces concentrés, on peut obtenir par dilution avec de l'eau des émulsions de toute concentration désirée, qui convient particulièrement à l'application sur les feuilles.

Les suspensions concentrées, également applicables en pulvérisation, sont préparées de manière à obtenir un produit fluide stable ne se déposant pas et elles contiennent habituellement de 10 à 75 % de matières actives, de 0,5 à 15 % d'agents tensioactifs, de 0,1 à 10 % d'agents thixotropes, de 0 à 10 % d'additifs appropriés, comme des pigments, des colorants, des anti-mousses, des inhibiteurs de corrosion, des stabilisants, des agents de pénétration et des adhésifs et, comme support, de l'eau ou un liquide organique dans lequel les matières actives sont peu ou pas solubles : certaines matières solides organiques ou des sels minéraux peuvent être dissous dans le support pour aider à empêcher la sédimentation ou comme antigels pour l'eau.

Les poudres mouillables (ou poudre à pulvériser) sont habituellement préparées de manière qu'elles contiennent 20 à 95 % de matières actives, et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des pigments, des colorants, des agents de pénétration, des adhésifs, ou des agents antimottants, colorants, etc...

Pour obtenir ces poudres à pulvériser ou poudres mouillables, on mélange intimement les matières actives dans des mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée et ces suspensions sont utilisables très avantageusement en particulier pour l'application sur les feuilles des végétaux.

A la place des poudres mouillables, on peut réaliser des pâtes. Les conditions et modalités de réalisation et d'utilisation de ces pâtes sont semblables à celles des poudres mouillables ou poudres à pulvériser.

Les granulés dispersables sont habituellement préparés par agglomération, dans des systèmes de granulation appropriés, de composition de type poudre mouillable.

Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Parmi ces compositions, l'homme de métier choisira avantageusement celle ou celles convenant selon les associations choisies.

Les compositions peuvent le plus souvent contenir deux herbicides régulateurs de croissance définis ci-avant (association binaire) ou trois (association ternaire) ou même quatre (association quaternaire).

L'invention concerne également un procédé de traitement des cultures destiné à protéger ces cultures contre les mauvaises herbes et/ou à améliorer les rendements, caractérisé en ce que l'on applique sur les feuilles des végétaux à détruire une dose efficace, et non phytotoxique pour la culture à protéger, d'une composition selon l'invention.

Selon le procédé de l'invention, on applique à la surface devant être traitée, c'est-à-dire à la surface infestée ou susceptible d'être infestée par des mauvaises herbes, notamment des mauvaises herbes nuisibles aux céréales, des compositions herbicides comprenant les matières actives (I) et (II) définies ci-dessus, ces matières actives étant appliquées à la dose de 25 à 250 g/ha pour la clomazone (I), de préférence de 50 à 150 g/ha, et à la dose de 1000 à 3000 g/ha, de préférence entre 1500 à 2000 g/ha pour l'aclonifen (II).

Parmi les cultures auxquelles les compositions selon l'invention sont applicables, les céréales sont les principales cultures concernées, notamment le blé, l'orge, l'avoine, le seigle et leurs hybrides; le maïs ainsi que le pois protéagineux. Outre la bonne sélectivité des compositions selon l'invention, celles-ci présentent en outre une bonne activité pour les cultures infestées ou susceptibles d'être infestées de gaillet (*Galium Aparine*). Cette mauvaise herbe est un problème particulièrement difficile à résoudre car très peu de produits herbicides la détruisent avec un haut pourcentage d'activité. Or, il suffit de deux plantes par mètre carré pour réduire le rendement des céréales. C'est sur cette mauvaise herbe que les résultats ont été les plus spectaculaires comme le montre l'exemple donné ci-après. Toutefois, une bonne synergie a été mise en évidence pour d'autres mauvaises herbes (*aethusa cynapum, ammi majus, atriplex patula, fumaria officinalis, polygonum convolvulus*). Enfin, pour d'autres mauvaises herbes comme *polygonum aviculare* on a observé une simple additivité, mais des essais à doses plus faibles auraient peut être montré une synergie également.

Le procédé peut être mis en oeuvre par utilisation d'une composition prête à l'emploi, ou par mélange extemporané juste avant l'emploi des différentes matières actives (tank mix). La composition peut également être formée in situ par applications successives sur la feuille des diverses matières actives.

La composition herbicide objet de l'invention est appliquée au moyen de différents procédés de traitement tels que :

- la pulvérisation sur les parties aériennes des cultures à traiter d'un liquide comprenant ladite composition,
- le poudrage, l'incorporation au sol de granulés ou de poudres, l'arrosage.

L'exemple suivant donné à titre non limitatif illustre l'invention et montre comment elle peut être mise en oeuvre. Cet exemple montre un effet particulièrement significatif. Cet exemple correspond à des cas choisis de mauvaises herbes contre lesquelles il est difficile de lutter.

Exemple 1 :

Lors d'une expérimentation conduite sur pois protéagineux de printemps, les efficacités moyennes d'aclonifen seul à 1800 g/ha et de clomazone seule à 70 g/ha ont été comparées aux efficacités des produit utilisés aux mêmes doses mais en mélanges extemporanés.

Pour ce faire, une formulation commerciale d'aclonifen (Challenge, 600g/l) est utilisée à 3 l/ha, tandis qu'une formulation de clomazone (483g/l) est utilisée à 0,145 l/ha.

La lecture est faite 60 jours après le traitement herbicide et on obtient alors les résultats donnés dans le tableau ci-dessous pour les diverses mauvaises herbes. Comme déjà précisé, une bonne synergie a été mise en évidence pour de nombreuses espèces et c'est sur gaillet que les résultats ont été les plus spectaculaires.

Le tableau ci-dessous donne donc les efficacités obtenues, les efficacités attendues selon Colby ainsi que le gain (synergie) d'efficacité ainsi réalisé par l'emploi du mélange.

| | aclonifen 1800g/ha | clomazone 70g/ha | aclonifen 1800g/ha+ clomazone 70g/ha | efficacité selon Colby | synergie. |
|---|---|---|---|---|---|
| *aethusa cynapum* | 0% | 78% | 99% | 78% | +21% |

(suite)

|  | aclonifen 1800g/ha | clomazone 70g/ha | aclonifen 1800g/ha+ clomazone 70g/ha | efficacité selon Colby | synergie. |
|---|---|---|---|---|---|
| *ammi majus* | 58% | 50% | 90% | 79% | +11% |
| *atriplex patula* | 78,7% | 54,3% | 96,3% | 90,3% | +6% |
| *fumaria officinalis* | 32,5% | 20% | 60% | 46% | +14% |
| *galium aparine* | 25% | 40% | 88% | 55% | +33% |
| *polygonum aviculare* | 77,5% | 89% | 97,5% | 97,5% | 0% |
| *polygonum convolvulus* | 72% | 74,5% | 94,8% | 93% | +2% |

## Revendications

**1.** Associations herbicides **caractérisées en ce qu'**elles comprennent comme matière active un mélange comprenant la clomazone (I) et l'aclonifen (II).

**2.** Compositions selon la revendication 1 comprenant une quantité synergistiquement active d'un mélange comprenant la clomazone (I) et l'aclonifen (II).

**3.** Compositions selon la revendication 1 comprenant une proportion pondérale de composé (I) par rapport au composé (II) comprise entre 0,008 et 0,25, de préférence entre 0,025 et 0,1.

**4.** Compositions herbicides selon l'une des revendications 1 à 3 contenant 0,5 à 95 % de matières actives.

**5.** Procédé de traitement des cultures destiné à protéger ces cultures contre les mauvaises herbes et/ou à améliorer les rendements, **caractérise en ce que** l'on applique sur les feuilles des végétaux une dose efficace et non phytotoxique d'une composition selon l'une des revendications 1 à 4.

**6.** Procédé selon la revendication 5 dans lequel on applique à la surface devant être traitée, c'est-à-dire à la surface infestée ou susceptible d'être infestée par des mauvaises herbes, des compositions herbicides comprenant les matières actives (I) et (II), ces matières actives étant appliquées à la dose de 25 à 150 g/ha pour la clomazone (I), de préférence de 50 à 150 g/ha, et à la dose de 1000 à 3000 g/ha, de préférence entre 1500 à 2000 g/ha pour l'aclonifen (II).

**7.** Procédé selon l'une des revendications 5 ou 6 dans lequel on traite une culture de blé, ou orge, ou avoine, ou seigle ou maïs ou pois.

## Patentansprüche

**1.** Herbizide Mischungen, **dadurch gekennzeichnet, daß** sie als Wirkstoff ein Gemisch enthalten, das Clomazon (I) und Aclonifen (II) umfaßt.

**2.** Zusammensetzungen nach Anspruch 1, umfassend eine synergistisch wirksame Menge eines Gemisches, das Clomazon (I) und Aclonifen (II) enthält.

**3.** Zusammensetzungen nach Anspruch 1, umfassend einen Gewichtsanteil der Verbindung (I), bezogen auf die Verbindung (II), von 0,008 bis 0,25, bevorzugt von 0,025 bis 0,1.

**4.** Herbizide Zusammensetzungen nach einem der Ansprüche 1 bis 3, enthaltend 0,5 bis 95% Wirkstoffe.

**5.** Verfahren zur Behandlung von Kulturen zum Schützen dieser Kulturen gegen Unkräuter und/oder zur Verbesserung der Erträge, **dadurch gekennzeichnet, daß** man auf die Blätter der Pflanzen eine wirksame und nicht phytotoxische Dosis einer Zusammensetzung nach einem der Ansprüche 1 bis 4 aufbringt.

**6.** Verfahren nach Anspruch 5, worin man auf die zu behandelnde Fläche, das heißt auf die Fläche, die von Unkräutern befallen ist oder befallen werden kann, herbizide Zusammensetzungen aufbringt, die die Wirkstoffe (I) und (II) umfassen, wobei diese Wirkstoffe in einer Dosis von 25 bis 150 g/ha für Clomazon (I), vorzugsweise von 50 bis 150 g/ha, und in einer Dosis von 1.000 bis 3.000 g/ha, vorzugsweise von 1.500 bis 2.000 g/ha, für Aclonifen (II) aufgebracht werden.

**7.** Verfahren nach einem der Ansprüche 5 oder 6, worin eine Kultur von Weizen, Gerste, Hafer, Roggen, Mais oder Erbsen behandelt wird.

**Claims**

**1.** A herbicidal combination, which comprises, as active material, a mixture comprising clomazone (I) and aclonifen (II).

**2.** The composition as claimed in claim 1, comprising a synergistically active amount of a mixture comprising clomazone (I) and aclonifen (II).

**3.** The composition as claimed in claim 1, comprising a weight proportion of compound (I) relative to compound (II) of between 0.008 and 0.25, preferably between 0.025 and 0.1.

**4.** The herbicidal composition as claimed in one of claims 1 to 3, containing 0.5 to 95% of active material.

**5.** A process for treating crops, intended to protect these crops against weeds and/or to improve the yields, wherein an effective and non-phytotoxic dose of a composition as claimed in one of claims 1 to 4 is applied to the leaves of the plants.

**6.** The process as claimed in claim 5, in which herbicidal compositions comprising the active materials (I) and (II) are applied to the area which has to be treated, i.e. to the area which is infested or liable to be infested with weeds, these active materials being applied at a dose of 25 to 150 g/ha for clomazone (I), preferably of 50 to 150 g/ha, and at a dose of 1 000 to 3 000 g/ha, preferably between 1 500 and 2 000 g/ha, for aclonifen (II).

**7.** The process as claimed in either of claims 5 or 6, in which a wheat, barley, oat, rye, maize or pea crop is treated.